# EUROPEAN PATENT APPLICATION

(11) **EP 3 783 961 A1**
(43) Date of publication of application: **24.02.2021**
(21) Application number: 20190562.7
(22) Date of filing: 11.08.2020
(51) Int. Cl.: H04W 48/14

(54) **SYSTEM INFORMATION REQUEST AND ACQUISITION IN A CONNECTED MODE**

(30) Priority: 13.08.2019 CN 201910745585
(71) Applicant: Apple Inc., Cupertino, CA 95014 (US)
(72) Inventor: XU, Fangli, Cupertino, CA 95014 (US); ZHANG, Dawei, Cupertino, CA 95014 (US); CHEN, Yuqin, Cupertino, CA 95014 (US); HU, Haijing, Cupertino, CA 95014 (US)
(74) Representative: Lang, Johannes

(57) **Abstract**

A user equipment (UE) in a connected mode with respect to a base station transmits a request for desired system information via dedicated uplink signaling, thus increasing the probability of successful reception of the request as compared to transmission over a contention based channel. (The request may identify one or more desired system information blocks, or, one or more desired block portions.) The base station may transmit the desired system information using dedicated downlink signaling, thereby avoiding collisions with unicast downlink transmissions to the UE. Alternatively, the base station may simply broadcast the desired system information. The base station may also transmit, via dedicated downlink signaling, an indication of whether the request is granted or not. The disclosed mechanisms may support modern services such as Vehicle-to-Everything (V2X) and Multimedia Broadcast Multicast Service (MBMS).

## Description

### Field

The present disclosure relates to the field of wireless communication, and more particularly, to mechanisms enabling a user equipment device to request and receive system information while in a connected mode.

### Description of the Related Art

A wireless user equipment device in a connected mode may have difficulty receiving broadcasts of system information due to collision of the system information broadcasts with unicast transmissions directed to the user equipment. Furthermore, the user equipment may be compelled to invoke a random access procedure in order to request system information from a network, even though a unicast channel already exists, thus wasting power. Therefore, there exists a need for mechanisms capable of improving the performance of the user equipment when requesting and acquiring system information from a wireless network.

### Summary

In one set of embodiments, a wireless user equipment (UE) device may be include a radio subsystem for performing wireless communication; and a processing element operatively coupled to the radio subsystem. In a connected mode, the processing element may be configured to transmit, via dedicated uplink signaling, a request for system information.

In some embodiments, in the connected mode, the processing element is further configured to receive the system information. The system information may be received via dedicated downlink signaling. Alternatively, the system information may be received via non-dedicated downlink signaling, e.g., from a broadcast channel.

In some embodiments, the request for system information may be a request for update of previously received system information. In at least some of these embodiments, the processing element may be further configured to: receive an activation time; and activate the received system information at the activation time.

In some embodiments, the request may identify one or more system information block numbers that the UE is requesting.

In some embodiments, the request may include cell identification information that identifies a non-primary cell for which the system information is being requested.

In some embodiments, the request may indicate at least a portion of a particular system information block (SIB).

In some embodiments, the requested system information may be received from a channel that is dedicated for the wireless UE device at least for a limited period of time.

In some embodiments, the processing element may be further configured to, prior to receiving the system information, receive an indication that indicates whether or not the request has been granted, wherein the indication is received via dedicated downlink signaling for the wireless UE device.

In some embodiments, in response to determining that the indication indicates that the request has been granted, the processing element may be configured to receive the system information via dedicated downlink signaling.

In some embodiments, in response to determining that the indication indicates that the request has been granted, the processing element may be configured to receive scheduling information indicating when the requested system information will be available for reception by the UE device, wherein the scheduling information is received via dedicated downlink signaling.

In some embodiments, the processing element may be further configured to: start a timer in response to said transmission of the request for system information; and refrain from transmitting a second request for system information until after the timer expires.

In various embodiments, a base station may transmit system information (SI). The SI may include a master information block (MIB) and a number of system information blocks (SIBs), denoted SIB-1 through SIB-N. Different blocks may convey different information content, e.g., content as defined by a wireless communication standard such as 3GPP LTE or 3GPP 5G NR. The SI may include minimum SI and other SI. The minimum SI may include information required for initial access and for acquiring other system information. The minimum SI may include the MIB and SIB-1. In some embodiments, a UE must acquire the contents of the minimum SI from a cell in order to camp on the cell. The other SI may include the SIBs that are not included in the minimum SI.

### Brief Description of the Drawings

A better understanding of the present subject matter can be obtained when the following detailed description of the preferred embodiment is considered in conjunction with the following drawings.
Figures 1-2 illustrate examples of wireless communication systems, according to some embodiments.
Figure 3 illustrates an example of a base station in communication with a user equipment device, according to some embodiments.
Figure 4 illustrates an example of a block diagram of a user equipment device, according to some embodiments.
Figure 5 illustrates an example of a block diagram of a base station, according to some embodiments.
Figure 6 illustrates an example of a user equipment 600, according to some embodiments.
Figure 7 illustrates an example of a base station 700, according to some embodiments. The base station 700 may be used to communicate with user equipment 600 of Figure 6.
Figures 8A and 8B illustrate examples of methods for requesting and acquiring a system information update related to Vehicle to Everything (V2X) service, according to some embodiments.
Figure 9 illustrates an example of a method for requesting and acquiring system information relating to Multimedia Broadcast Multicast Service (MBMS), according to some embodiments.
Figure 10 illustrates an example of a method for requesting and acquiring system information relating to a second cell, according to some embodiments.
Figure 11 illustrates an example of a method for controlling a rate at which a user equipment is allowed to make requests for system information, according to some embodiments.
Figure 12 illustrates an example of a method enabling a user equipment to transmit a request for system information, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### Detailed Description of the Embodiments

### Acronyms

The following acronyms are used in this disclosure.
3GPP: Third Generation Partnership Project
3GPP2: Third Generation Partnership Project 2
5G NR: 5^{th} Generation New Radio
DC: Dual Connectivity
DL: Downlink
eNB (or eNodeB): Evolved Node B, i.e., the base station of 3GPP LTE
EN-DC: E-UTRA NR Dual Connectivity
eUICC: embedded UICC
gNB (or gNodeB): next Generation NodeB, i.e., the base station of 5G NR
GSM: Global System for Mobile Communications
HARQ: Hybrid ARQ
LTE: Long Term Evolution
LTE-A: LTE-Advanced
MAC: Medium Access Control
MAC-CE: MAC Control Element
MBMS: Multimedia Broadcast Multicast Service
MCG: Master Cell Group
MCS: Modulation & Coding Scheme
MR-DC: Multi-RAT DC
NR: New Radio
NR-DC: NR Dual Connectivity
NW: Network
RAT: Radio Access Technology
RLC: Radio Link Control
RRC: Radio Resource Control
SCG: Secondary Cell Group
SIB: System Information Block
SIB#n: System Information Block Number n.
UE: User Equipment
UICC: Universal Integrated Circuit Card
UL: Uplink
UMTS: Universal Mobile Telecommunications System
V2X: Vehicle to Everything

### Terms

The following is a glossary of terms used in this disclosure:
**Memory Medium** - Any of various types of memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".
**Computer System** - any of various types of computing or processing systems, including a personal computer system (PC), mainframe computer system, workstation, network appliance, Internet appliance, personal digital assistant (PDA), personal communication device, smart phone, television system, grid computing system, or other device or combinations of devices. In general, the term "computer system" can be broadly defined to encompass any device (or combination of devices) having at least one processor that executes instructions from a memory medium.
**User Equipment (UE) (or "UE Device")** - any of various types of computer systems devices which are mobile or portable and which performs wireless communications. Examples of UE devices include mobile telephones or smart phones (e.g., iPhone™, Android™-based phones), portable gaming devices (e.g., Nintendo DS™, PlayStation Portable™, Gameboy Advance™, iPhone™), wearable devices (e.g., smart watch, smart glasses), laptops, PDAs, portable Internet devices, music players, data storage devices, or other handheld devices, etc. In general, the term "UE" or "UE device" can be broadly defined to encompass any electronic, computing, and/or telecommunications device (or combination of devices) which is easily transported by a user and capable of wireless communication.
**Base Station** - The term "Base Station" has the full breadth of its ordinary meaning, and at least includes a wireless communication station installed at a fixed location and used to communicate as part of a wireless telephone system or radio system.
**Processing Element** - refers to any of various elements or combinations of elements. Processing elements include, for example, circuits such as an ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

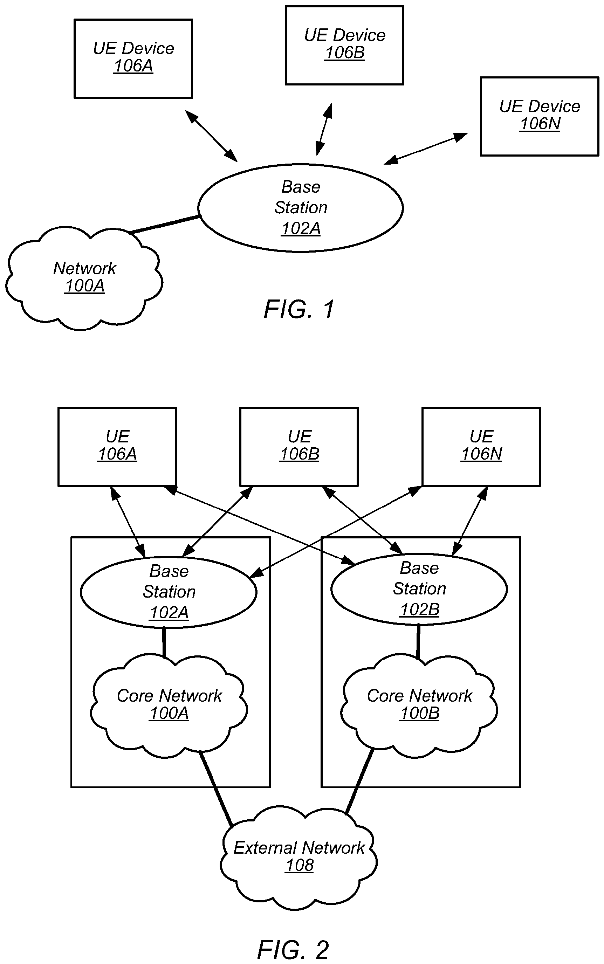

### Figures 1-3 - Communication System

Figures 1 and 2 illustrate exemplary (and simplified) wireless communication systems. It is noted that the systems of Figures 1 and 2 are merely examples of certain possible systems, and various embodiments may be implemented in any of various ways, as desired.

The wireless communication system of Figure 1 includes a base station 102A which communicates over a transmission medium with one or more user equipment (UE) devices 106A, 106B, etc., through 106N. Each of the user equipment devices may be referred to herein as "user equipment" (UE). In the wireless communication system of Figure 2, in addition to the base station 102A, base station 102B also communicates (e.g., simultaneously or concurrently) over a transmission medium with the UE devices 106A, 106B, etc., through 106N.

The base stations 102A and 102B may be base transceiver stations (BTSs) or cell sites, and may include hardware that enables wireless communication with the user devices 106A through 106N. Each base station 102 may also be equipped to communicate with a core network 100 (e.g., base station 102A may be coupled to core network 100A, while base station 102B may be coupled to core network 100B), which may be a core network of a cellular service provider. Each core network 100 may be coupled to one or more external networks (such as external network 108), which may include the Internet, a Public Switched Telephone Network (PSTN), or any other network. Thus, the base station 102A may facilitate communication between the user devices and/or between the user devices and the network 100A; in the system of Figure 2, the base station 102B may facilitate communication between the user devices and/or between the user devices and the network 100B.

The base stations 102A and 102B and the user devices may be configured to communicate over the transmission medium using any of various radio access technologies (RATs), also referred to as wireless communication technologies, or telecommunication standards, such as GSM, UMTS (WCDMA), LTE, LTE-Advanced (LTE-A), 3GPP2 CDMA2000 (e.g., 1xRTT, 1xEV-DO, HRPD, eHRPD), Wi-Fi, WiMAX etc.

For example, base station 102A and core network 100A may operate according to a first cellular communication standard (e.g., LTE) while base station 102B and core network 100B operate according to a second (e.g., different) cellular communication standard (e.g., GSM, UMTS, and/or one or more CDMA2000 cellular communication standards). The two networks may be controlled by the same network operator (e.g., cellular service provider or "carrier"), or by different network operators. In addition, the two networks may be operated independently of one another (e.g., if they operate according to different cellular communication standards), or may be operated in a somewhat coupled or tightly coupled manner.

Note also that while two different networks may be used to support two different cellular communication technologies, such as illustrated in the network configuration shown in Figure 2, other network configurations implementing multiple cellular communication technologies are also possible. As one example, base stations 102A and 102B might operate according to different cellular communication standards but couple to the same core network. As another example, multi-mode base stations capable of simultaneously supporting different cellular communication technologies (e.g., LTE and CDMA 1xRTT, GSM and UMTS, or any other combination of cellular communication technologies) might be coupled to a core network that also supports the different cellular communication technologies. Any of various other network deployment scenarios are also possible.

As a further possibility, it is also possible that base station 102A and base station 102B may operate according to the same wireless communication technology (or an overlapping set of wireless communication technologies). For example, base station 102A and core network 100A may be operated by one cellular service provider independently of base station 102B and core network 100B, which may be operated by a different (e.g., competing) cellular service provider. Thus in this case, despite utilizing similar and possibly compatible cellular communication technologies, the UE devices 106A-106N might communicate with the base stations 102A-102B independently, possibly by utilizing separate subscriber identities to communicate with different carriers' networks.

A UE 106 may be capable of communicating using multiple wireless communication standards. For example, a UE 106 might be configured to communicate using either or both of a 3GPP cellular communication standard (such as LTE) or a 3GPP2 cellular communication standard (such as a cellular communication standard in the CDMA2000 family of cellular communication standards). As another example, a UE 106 might be configured to communicate using different 3GPP cellular communication standards (such as two or more of GSM, UMTS, LTE, or LTE-A). Thus, as noted above, a UE 106 might be configured to communicate with base station 102A (and/or other base stations) according to a first cellular communication standard (e.g., LTE) and might also be configured to communicate with base station 102B (and/or other base stations) according to a second cellular communication standard (e.g., one or more CDMA2000 cellular communication standards, UMTS, GSM, etc.).

Base stations 102A and 102B and other base stations operating according to the same or different cellular communication standards may thus be provided as one or more networks of cells, which may provide continuous or nearly continuous overlapping service to UEs 106A-106N and similar devices over a wide geographic area via one or more cellular communication standards.

A UE 106 might also or alternatively be configured to communicate using WLAN, Bluetooth, one or more global navigational satellite systems (GNSS, e.g., GPS or GLONASS), one and/or more mobile television broadcasting standards (e.g., ATSC-M/H or DVB-H), etc. Other combinations of wireless communication standards (including more than two wireless communication standards) are also possible.

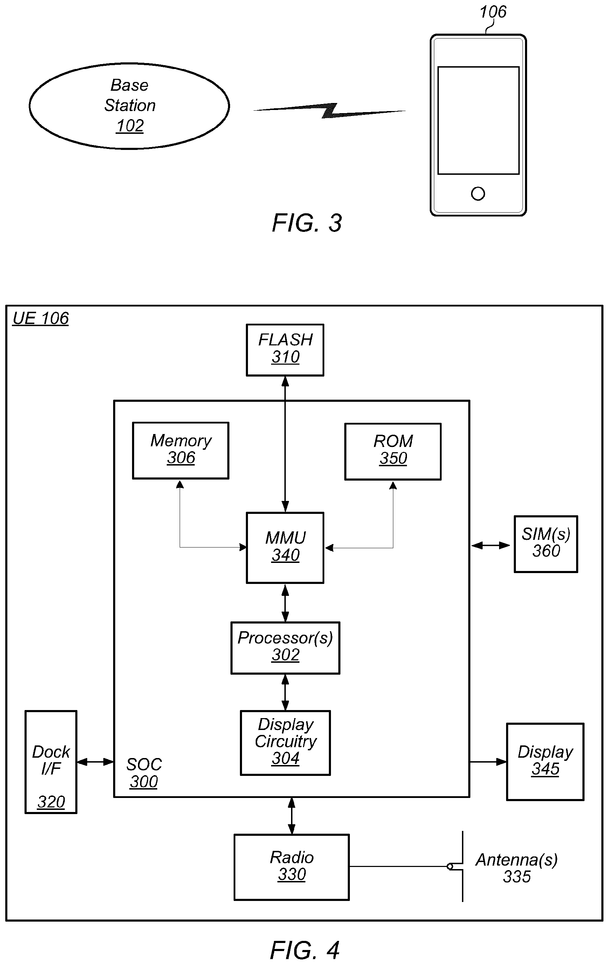

Figure 3 illustrates user equipment 106 (e.g., one of the devices 106A through 106N) in communication with a base station 102 (e.g., one of the base stations 102A or 102B). The UE 106 may be a device with wireless network connectivity such as a mobile phone, a hand-held device, a computer or a tablet, a wearable device or virtually any type of wireless device.

The UE may include a processor that is configured to execute program instructions stored in memory. The UE may perform any of the method embodiments described herein by executing such stored instructions. Alternatively, or in addition, the UE may include a programmable hardware element such as an FPGA (field-programmable gate array) that is configured to perform any of the method embodiments described herein, or any portion of any of the method embodiments described herein.

The UE 106 may be configured to communicate using any of multiple wireless communication protocols. For example, the UE 106 may be configured to communicate using two or more of GSM, UMTS (W-CDMA, TD-SCDMA, etc.), CDMA2000 (1xRTT, 1xEV-DO, HRPD, eHRPD, etc.), LTE, LTE-A, WLAN, or GNSS. Other combinations of wireless communication standards are also possible.

The UE 106 may include one or more antennas for communicating using one or more wireless communication protocols. Within the UE 106, one or more parts of a receive and/or transmit chain may be shared between multiple wireless communication standards; for example, the UE 106 might be configured to communicate using either (or both) of GSM or LTE using a single shared radio. The shared radio may include a single antenna, or may include multiple antennas (e.g., for MIMO or beamforming) for performing wireless communications. MIMO is an acronym for Multi-Input Multiple-Output.

### Figure 4 - Example of Block Diagram of a UE

Figure 4 illustrates an example of a block diagram of a UE 106. As shown, the UE 106 may include a system on chip (SOC) 300, which may include portions for various purposes. For example, as shown, the SOC 300 may include processor(s) 302 which may execute program instructions for the UE 106 and display circuitry 304 which may perform graphics processing and provide display signals to the display 345. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, radio 330, connector I/F 320, and/or display 345. The MMU 340 may be configured to perform memory protection and page table translation or set up. In some embodiments, the MMU 340 may be included as a portion of the processor(s) 302.

As shown, the SOC 300 may be coupled to various other circuits of the UE 106. For example, the UE 106 may include various types of memory (e.g., including Flash memory 310), a connector interface 320 (e.g., for coupling to a computer system, dock, charging station, etc.), the display 345, and radio 330.

The radio 330 may include one or more RF chains. Each RF chain may include a transmit chain, a receive chain, or both. For example, radio 330 may include two RF chains to support dual connectivity with two base stations (or two cells). The radio may be configured to support wireless communication according to one or more wireless communication standards, e.g., one or more of GSM, UMTS, LTE, LTE-A, WCDMA, CDMA2000, Bluetooth, Wi-Fi, GPS, etc.

The radio 330 couples to antenna subsystem 335, which includes one or more antennas. For example, the antenna subsystem 335 may include a plurality of antennas to support applications such as dual connectivity or MIMO or beamforming. The antenna subsystem 335 transmits and receives radio signals to/from one or more base stations or devices through the radio propagation medium, which is typically the atmosphere.

In some embodiments, the processor(s) 302 may include a baseband processor to generate uplink baseband signals and/or to process downlink baseband signals. The processor(s) 302 may be configured to perform data processing according to one or more wireless telecommunication standards, e.g., one or more of GSM, UMTS, LTE, LTE-A, WCDMA, CDMA2000, Bluetooth, Wi-Fi, GPS, etc.

The UE 106 may also include one or more user interface elements. The user interface elements may include any of various elements, such as display 345 (which may be a touchscreen display), a keyboard (which may be a discrete keyboard or may be implemented as part of a touchscreen display), a mouse, a microphone and/or speakers, one or more cameras, one or more sensors, one or more buttons, sliders, and/or dials, and/or any of various other elements capable of providing information to a user and/or receiving / interpreting user input.

As shown, the UE 106 may also include one or more subscriber identity modules (SIMs) 360. Each of the one or more SIMs may be implemented as an embedded SIM (eSIM), in which case the SIM may be implemented in device hardware and/or software. For example, in some embodiments, the UE 106 may include an embedded UICC (eUICC), e.g., a device which is built into the UE 106 and is not removable. The eUICC may be programmable, such that one or more eSIMs may be implemented on the eUICC. In other embodiments, the eSIM may be installed in UE 106 software, e.g., as program instructions stored on a memory medium (such as memory 306 or Flash 310) executing on a processor (such as processor 302) in the UE 106. As one example, a SIM 360 may be an application which executes on a Universal Integrated Circuit Card (UICC). Alternatively, or in addition, one or more of the SIMs 360 may be implemented as removeable SIM cards.

The processor 302 of the UE device 106 may be configured to implement part or all of the methods described herein, e.g., by executing program instructions stored on a memory medium (e.g., a non-transitory computer-readable memory medium). In other embodiments, processor 302 may be configured as or include: a programmable hardware element, such as an FPGA (Field Programmable Gate Array); or an ASIC (Application Specific Integrated Circuit); or a combination thereof.

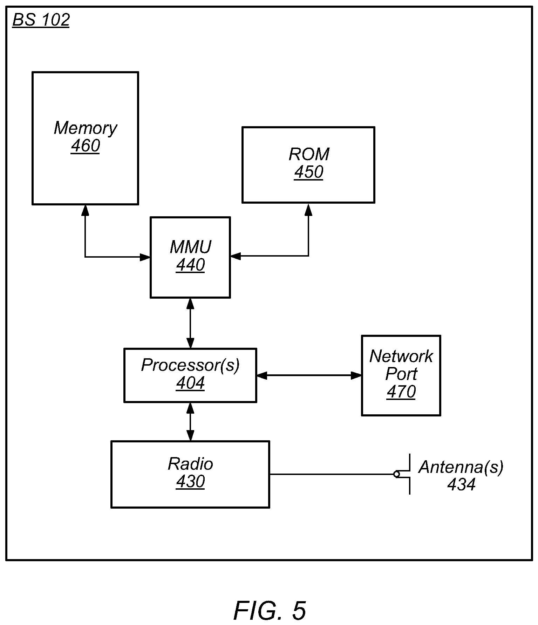

### Figure 5 -Example of a Base Station

Figure 5 illustrates a block diagram of a base station 102. It is noted that the base station of Figure 5 is merely one example of a possible base station. As shown, the base station 102 may include processor(s) 404 which may execute program instructions for the base station 102. The processor(s) 404 may also be coupled to memory management unit (MMU) 440, which may be configured to receive addresses from the processor(s) 404 and translate those addresses to locations in memory (e.g., memory 460 and read only memory ROM 450) or to other circuits or devices.

The base station 102 may include at least one network port 470. The network port 470 may be configured to couple to a telephone network and provide access (for a plurality of devices, such as UE devices 106) to the telephone network, as described above in Figures 1 and 2.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The base station 102 may include a radio 430 having one or more RF chains. Each RF chain may include a transmit chain, a receive chain, or both. (For example, the base station 102 may include at least one RF chain per sector or cell.) The radio 430 couples to antenna subsystem 434, which includes one or more antennas. Multiple antennas would be needed, e.g., to support applications such as MIMO or beamforming. The antenna subsystem 434 transmits and receives radio signals to/from UEs through the radio propagation medium (typically the atmosphere).

In some embodiments, the processor(s) 404 may include a baseband processor to generate downlink baseband signals and/or to process uplink baseband signals. The baseband processor 430 may be configured to operate according to one or more wireless telecommunication standards, including, but not limited to, GSM, LTE, WCDMA, CDMA2000, etc.

The processor(s) 404 of the base station 102 may be configured to implement part or all of the methods described herein, e.g., by executing program instructions stored on a memory medium (e.g., a non-transitory computer-readable memory medium). In some embodiments, the processor(s) 404 may include: a programmable hardware element, such as an FPGA (Field Programmable Gate Array); or an ASIC (Application Specific Integrated Circuit); or a combination thereof.

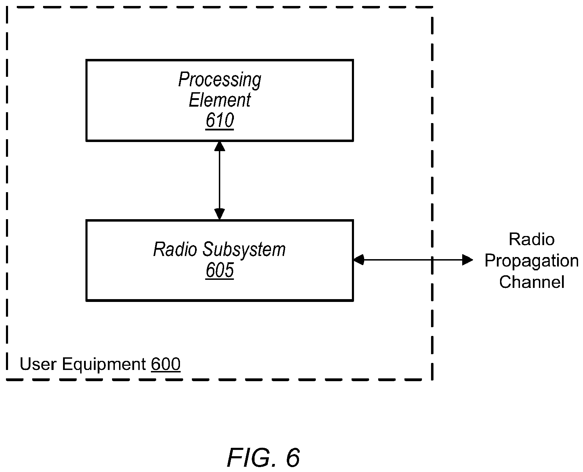

In some embodiments, a wireless user equipment (UE) device 600 may be configured as shown in Figure 6. UE device 600 may include: a radio subsystem 605 for performing wireless communication; and a processing element 610 operatively coupled to the radio subsystem. (UE device 600 may also include any subset of the UE features described above, e.g., in connection with Figures 1-4.)

The radio subsystem 605 may include one or more RF chains, e.g., as variously described above. Each RF chain may be configured to receive signals from the radio propagation channel and/or transmit signals onto the radio propagation channel. Thus, each RF chain may include a transmit chain and/or a receive chain. The radio subsystem 605 may be coupled to one or more antennas (or arrays of antennas) to facilitate signal transmission and reception. Each RF chain (or, some of the RF chains) may be tunable to a desired frequency, thus allowing the RF chain to receive or transmit at different frequencies at different times.

The processing element 610 may be coupled to the radio subsystem, and may be configured as variously described above. (For example, processing element may be realized by processor(s) 302.) In some embodiments, the processing element may include one or more baseband processors to (a) generate baseband signals to be transmitted by the radio subsystem and/or (b) process baseband signals provided by the radio subsystem.

The processing element 610 may be further configured as variously described in the sections below.

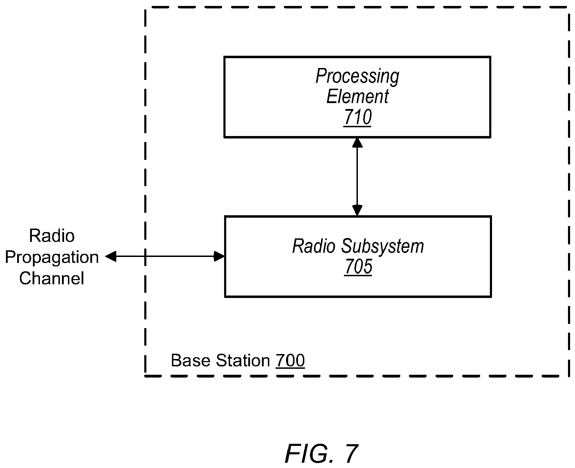

In some embodiments, a wireless base station 700 of a wireless network (not shown) may be configured as shown in Figure 7. The wireless base station may include: a radio subsystem 705 for performing wireless communication over a radio propagation channel; and a processing element 710 operatively coupled to the radio subsystem. (The wireless base station may also include any subset of the base station features described above, e.g., the features described above in connection with Figure 5.)

The radio subsystem 710 may include one or more RF chains. Each RF chain may be tunable to a desired frequency, thus allowing the RF chain to receive or transmit at different frequencies at different times.

The processing element 710 may be realized as variously described above. For example, in one embodiment, processing element 710 may be realized by processor(s) 404. In some embodiments, the processing element may include one or more baseband processors to: (a) generate baseband signals to be transmitted by the radio subsystem, and/or, (b) process baseband signals provided by the radio subsystem.

The processing element 710 may be configured to perform any of the base station method embodiments described herein.

### System Information Transmission and Acquisition Procedures

In some embodiments, system information may be transmitted according to one or more of two procedures.

In a first procedure, system information may be broadcast periodically. The network (NW) may broadcast the system information periodically according to the scheduling information indicated for each block of system information (SI). The scheduling information for each block may be indicated in SIB-1. Minimum system information, including a Master Information Block (MIB) and SIB-1, may be periodically broadcast. The other system information may be configured as periodic broadcast as well.

In a second procedure, system information may be broadcast on demand from the user equipment. The NW may broadcast the system information upon receiving a request from the UE; the UE may request the system information according to its interest. The other SI may be configured as on demand broadcast.

In some embodiments, the UE may acquire system information in a connected mode. The UE may monitor the broadcasts of MIB and SIB1 if the reception of these broadcasts does not disrupt unicast data reception.

In some embodiments, the NW may provide SIB 6/7/8 to the connected UE through dedicated signaling using an RRC reconfiguration message. (In some embodiments, the notation a/b/c means "any subset of the set {a,b,c}".) RRC is an acronym for Radio Resource Control.) For other SIBs (i.e., other than SIBs 6, 7 and 8), the UE may be configured to acquire these SIBs, but the acquisition of these SIBs preferably should not interrupt unicast data transmission.

In some embodiments, the system information may be organized in a structure that includes minimum system information (SI) and other SI. The minimum SI may be broadcast periodically. The other SI may be optionally present and broadcast periodically. The other SI (or portions thereof) may also be broadcast on demand.

The minimum SI may include a Master Information Block (MIB) and System Information Block 1 (SIB1).

In some embodiments, the MIB may include: essential Layer 1 (LI) info required for further system information (SI); the scheduling of SIB1; and cell barred status information. (Layer 1 refers to the Physical Layer.) The MIB may be periodically broadcast in a PBCH (Physical Broadcast Channel). In some embodiments, SIB1 may include: initial access required information (e.g. cell selection, cell access); and the scheduling of other SIBs. SIB1 may broadcast in PDSCH (Physical Downlink Shared Channel).

In some embodiments, the other SI may include SIBs 2-9 as follows.
SIB2 may include common cell re-selection (similar to LTE SIB3).
SIB3 may include intra-frequency cell re-selection (similar to LTE SIB4).
SIB4 may include inter-frequency cell re-selection (similar to LTE SIB5).
SIB5 may include inter-RAT cell re-selection to E-UTRAN. (RAT is an acronym for Radio Access Technology. E-UTRAN is an acronym for Evolved UMTS Terrestrial Radio Access Network.)
SIB6 may include ETWS primary notification. (ETWS is an acronym for Earthquake and Tsunami Warning System.)
SIB7 may include ETWS secondary notification.
SIB8 may include CMAS warning notification. (CMAS is an acronym for Commercial Mobile Alert System.)
SIB9 may include GNSS and UTC information. (GNSS is an acronym for Global Navigation Satellite System. UTC is an acronym for Coordinated Universal Time.)

In some embodiments, the UE may assert an SI request using Msg1 of the random access procedure, as follows. The UE may select a PRACH preamble and/or select resource(s) based on the one or more SIBs being requested. The UE may transmit the dedicated PRACH preamble (also referred to as a "random access preamble") to the base station (e.g., to a gNB of 5G NR). In response to receiving the PRACH preamble, the base station may transmit a special random access response (RAR) where the response includes (or is equal to) a Random Access Preamble Identifier (RAPID). After sending the RAR, the base station may transmit the UE-requested SIB(s). In these embodiments, the UE may employ the following configuration structure for transmitting a Msg1 based SI request.

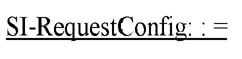

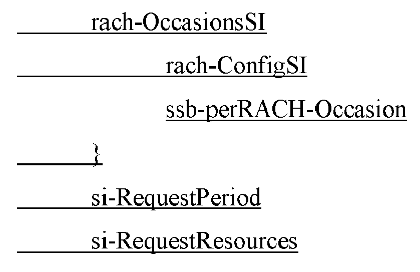

In some embodiments, the UE may assert an SI request using Msg3 of the random access procedure, as follows. The UE may initiate the random access procedure by transmitting a random access preamble (i.e., Msg1) to the base station (e.g., to a gNB of 5G NR). In response to receiving the random access preamble, the base station may transmit a random access response (Msg2), including an uplink grant for the UE. The UE may then transmit to the base station a system information request as Msg3, e.g., using the resource(s) identified by the uplink grant. The system information request may indicate the one or more SIBs requested by the UE, and may omit the UE ID that would typically be included in random access according to the prior art. (The SI request may be an RRC message.) In response to the receiving the system information request, the base station may transmit a message (Msg4) to the UE, acknowledging the SI request (e.g., using a MAC Control Element with Content=Msg3). After transmitting the acknowledgement message, the base station may transmit the requested SIB(s) to the UE.

In some embodiments, the network may broadcast the requested system information M times, with a defined period. The repetition number M and the period may configured parameters.

### System Information Acquisition in a Connected Mode

In some embodiments, a user equipment (UE) in a connected mode may send a request for system information (SI) to a network (NW) via dedicated signaling. The request may provide an indication of system information that the UE is interested in receiving from the network. For example, the request may identify one or more System Information Block (SIB) numbers, or one or more portions of system information within one or more system information blocks.

In some embodiments, the request for system information may be a request for update of system information. For example, one or more components of the system information may change over time, and thus, the UE may request a system information update for the one or more components, to receive the current value(s) or state(s) of the one or more components.

In some embodiments, the NW may provide the UE-requested system information or a broadcast configuration for the UE-requested system information via dedicated signaling.

In some embodiments, a timer based mechanism may be used to limit the frequency of UE requests for system information. For example, the NW may configure a timer. When the UE transmits a SI request to the NW, the UE may start the timer, e.g., start counting down from a configured initial value. The UE may then refrain from transmitting an SI request while the timer is running. After the timer expires (e.g., reaches zero), the UE is then allowed to transmit a system information request.

In some embodiments, if the NW cannot provide the requested SI (or requested SI update), the NW may provide (i.e., transmit to the UE) an indication that the SI request is rejected. The UE may then attempt to acquire the desired SI in a legacy fashion.

### System Information Update Request and Acquisition

In some embodiments, a UE in a connected mode may transmit a request for an update of system information via dedicated signaling. For example, the request may identify a particular SIB number to be updated. Upon receiving the request, the NW may provide the requested SIB to the UE via dedicated signaling. Alternatively, the NW may: provide via dedicated signaling an indication that the request is granted; and then broadcast the requested SIB. The UE may then acquire (i.e., receive) the SIB broadcast.

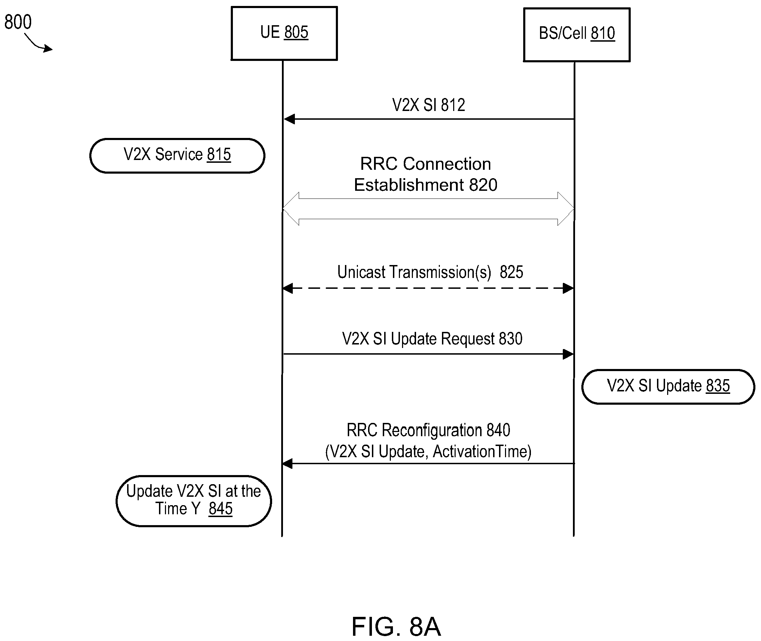

In some embodiments, a method 800 for requesting and acquiring a system information update from a network may include the operations shown in Figure 8A, or any subset of those operations. A base station (BS) 810 (or a cell of a base station) may transmit to a user equipment (UE) 805 system information (SI) 812 related to V2X service. (In some embodiments, the base station may be an eNB of 3GPP LTE or a gNB of 5G NR.) The system information 812 may be in the form of a master information block and one or more system information blocks (SIBs). V2X is an acronym for Vehicle-to-Everything. (Thus, in some embodiments, the UE may be resident in a vehicle or as part of a vehicle's electronics subsystem.)

In response to receiving the V2X-related system information 812, the UE 805 may initiate V2X service 815 based on the V2X-related system information.

At 820, the UE may establish an RRC connection with the base station 810. RRC is an acronym for Radio Resource Control.

At 825, the UE may transmit and/or receive unicast transmission(s) to/from the base station. A unicast transmission is a transmission that occurs over channel resources (e.g., time-frequency resources) that are scheduled for (e.g., exclusively for) the UE.

At 830, the UE may transmit, via dedicated signaling, a request for update of the V2X-related system information.

At 835, the base station may generate an update of the V2X-related system information for the UE, and determine an activation time Y when the update should become active.

At 840, the base station may transmit an RRC reconfiguration message 840 that includes dedicated signaling, to provide the requested update of the V2X-related system information (V2X SI) and the activation time Y. The UE may receive: the update of V2X-related system information; and the activation time Y.

At 845, the UE may activate (i.e., put into force) the update at the activation time Y. The UE may include an internal clock so it can determine when the activation time Y has arrived.

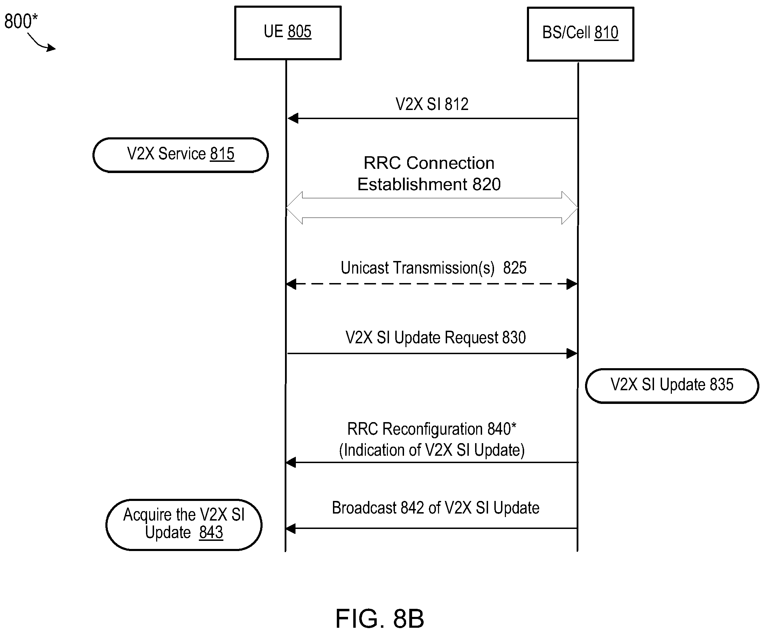

Figure 8B illustrates a method 800* for requesting and acquiring a system information update from a network. Method 800* is similar to the method 800 described above. However, instead of RRC configuration message 840, method 800* includes transmission of an RRC configuration message 840* by the base station. The message 840* includes dedicated signaling to indicate that the request for update of the V2X-related system information (V2X SI) is approved. In response to receiving the indication, the UE may prepare to receive the V2X SI update. The V2X SI update preferably is not included in the message 840*, but included in a broadcast transmission 842 from the base station. The UE acquires (i.e., receives) the V2X SI update, as shown at 843. The broadcast transmission 842 may also include broadcast of an activation time, as discussed above. The UE may update the operation of the V2X service based on the V2X SI update.

### System Information Request and Acquisition

In some embodiments, a user equipment (UE) in a connected mode may transmit a request for acquisition of system information, e.g., for acquisition of a particular system information block (SIB) number (or a plurality of SIB numbers). The network (NW) may transmit the requested SIB to the UE via dedicated signaling. Alternatively, the NW may: provide via dedicated signaling an indication to the UE that the requested SIB will be broadcast; and broadcast the requested SIB. The UE may then acquire the SIB broadcast.

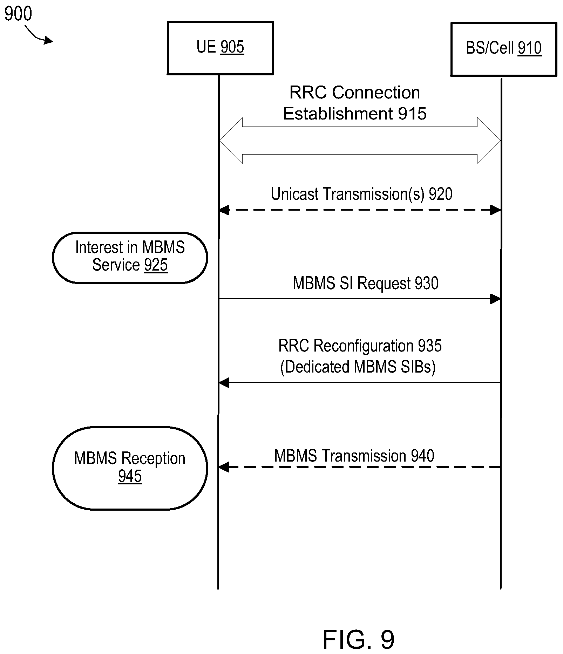

In some embodiments, a method 900 for requesting and acquiring system information from a network may include the operations shown in Figure 9, or any subset thereof.

At 915, a user equipment (UE) 905 may establish an RRC connection with a network via a base station 910 (or a cell of a base station). In some embodiments, the base station may be an eNB of 3GPP LTE or a gNB of 5G NR

At 920, the UE may transmit and/or receive unicast transmission(s) to/from the base station.

At 925, the UE may enter into a state of being interested in MBMS service, e.g., as a result user selection of a desired service. (MBMS is an acronym for Multimedia Broadcast Multicast Service.)

At 930, the UE may transmit, via dedicated signaling, a request for system information (SI) related to MBMS. The request may indicate one or more particular pieces of MBMS-related system information that the UE is requesting. For example, the request may indicate one or more system information block (SIB) numbers.

In some embodiments, the request may simply indicate that MBMS is requested. In some embodiments, the request may simply indicate that a type of V2X service is requested. In some embodiments, the request may be carried within a dataset that has been designated as UE assistance information. In some embodiments, the request may include an indication of Service Area Identification (SAI) information the UE is requesting from the network.

At 935, the base station may transmit, via dedicated signaling, the requested MBMS-related system information, e.g., the one or more requested MBMS SIBs. In some embodiments, the MBMS-related system information may be transmitted as part of an RRC reconfiguration message.

At 940, the base station may initiate MBMS transmission 940 consistent with the system information included in the MBMS SIBs.

At 945, the UE may perform MBMS reception, to receive data included in the MBMS transmission 940. The UE may display (or otherwise present or output) the received MBMS data to a user, or store the MBMS data in memory for later display.

### Request and Acquisition of System Information for Another Cell

In some embodiments, a user equipment (UE) in a connected mode may transmit via dedicated signaling a request for system information (or updated system information) associated with another cell, e.g., a cell other than a current cell to which the UE is connected. The request may identify a particular SIB number (or a plurality of SIB numbers). The network (NW) may provide the requested SIB(s) of the other cell to the UE, e.g., via dedicated signaling. In some embodiments, the other cell may be:
a secondary cell (SCell) of a Master Cell Group (MCG);
a primary cell (PCell) of a Secondary Cell Group (SCG);
a secondary cell of the SCG; or
a neighbor cell.

If the other cell is a serving cell, the UE may indicate the other cell with a cell index in the request message. If the other cell is a neighbor cell, the UE may identify the other cell using Physical Cell Identifier (PCI) and an indication of a frequency used by the other cell, e.g., the Synchronization Signal Block (SSB) frequency.

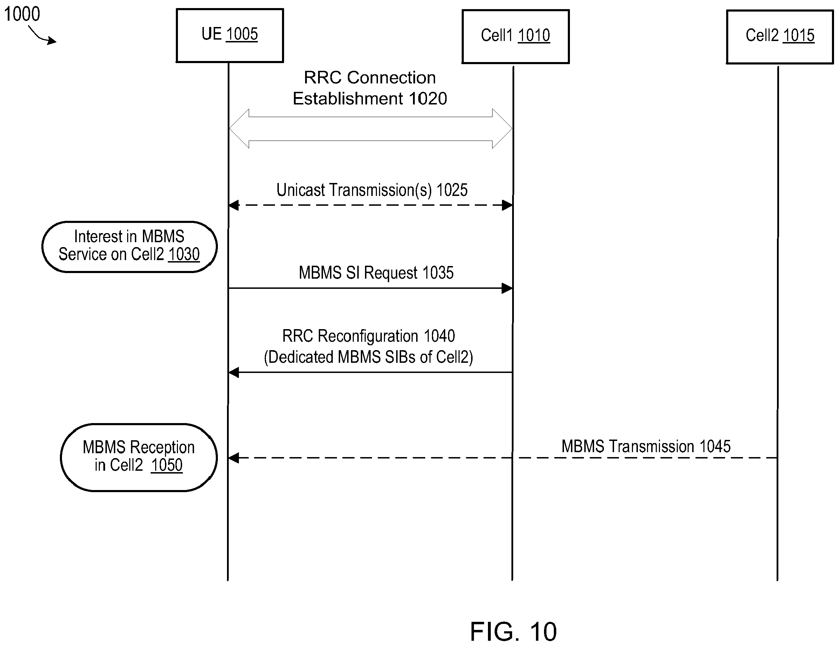

In some embodiments, a method 1000 for request and acquisition of system information (SI) relating to another cell may include the operations shown in Figure 10, or any subset of those operations.

At 1020, a user equipment (UE) 1005 may establish a connection (e.g., an RRC connection) with a first cell 1010 of a base station (BS). (In some embodiments, the first cell may be a primary cell of a Master Cell Group. In some embodiments, the base station may be an eNB of 3GPP LTE or a gNB of 5G NR.)

After the connection 1020 is established, the UE may transmit and/or receive unicast transmission(s) 1025 to/from the first cell 1010.

At 1030, the UE may enter into a state of being interested in MBMS on a second cell 1015, e.g., as a result of user selection. (MBMS is an acronym for Multimedia Broadcast Multicast Service.) The second cell may belong to the same or different base station than the first cell 1010.

After entering the state 1030, the UE may transmit via dedicated signaling a request for system information related to MBMS on the second cell. The request may identify one or more system information blocks, e.g., by their block number(s).

In response to receiving the request, the first cell 1010 may transmit via dedicated signaling the requested MBMS-related system information for the second cell, as shown at 1040. For example, the requested MBMS-related system information may be transmitted as part of an RRC reconfiguration message.

After receiving the MBMS-related system information, the UE may receive an MBMS transmission 1045 from the second cell 1015, as shown at 1050. The UE may display (or otherwise output) payload data from the MBMS transmission, or store the payload data in memory for later display.

### Timer Based Mechanism to Control Frequency of System Information Requests

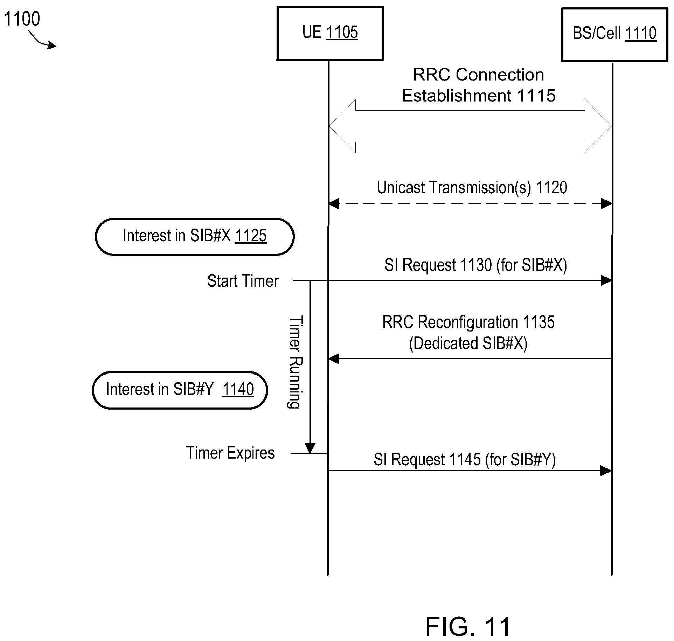

In some embodiments, a timer-based method 1100 for controlling the frequency of requests for system information by the UE may include the operations shown in Figure 11, or any subset of those operations.

A user equipment (UE) 1105 may establish an RRC connection 1115 with a base station 1110 (or a cell of a base station). In some embodiments, the base station may be an eNB of 3GPP LTE or a gNB of 5G NR

After the connection 1115 has been established, the UE may transmit and/or receive unicast transmission(s) 1120 to/from the base station 1110.

At 1125, the UE may enter a state of being interested in particular system information, e.g., in system information block #X (SIB#X), where X is a desired SIB number.

In response to entering state 1125, the UE may transmit via dedicated signaling a request for SIB#X to the base station. The UE may start a timer in response to transmission of the request. The UE may refrain from transmitting another request until after the timer expires. In some embodiments, an initial value of the timer may be determined by configuration information received from the base station (or from a network node, via the base station).

In response to receiving the request, the base station may transmit via dedicated signaling the requested SIB#X, as shown at 1135. For example, the requested SIB#X may be transmitted as part of an RRC reconfiguration message.

At 1140, the UE may enter into a state of being interested in different system information, e.g., system information corresponding to SIB#Y, where Y is a different SIB number than X. However, the UE may wait until after the timer expires to transmit a corresponding request for SIB#Y. See system information (SI) request 1145, which occurs after the timer expires.

### Figure 12

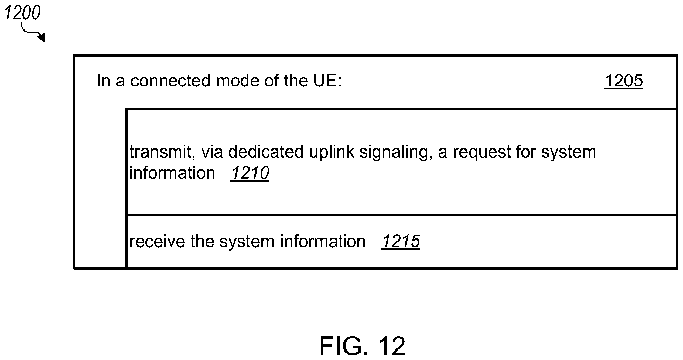

In one set of embodiments, a method 1200 for operating a user equipment (UE) device may perform the operations shown in Figure 12, or any subset thereof. The method 1200 may also include any subset of the features, elements and embodiments described above in connection with Figures 1-11. For example, the UE device may be configured as shown in Figure 7.

As shown at 1205, in a connected mode of the UE, a processing element of the UE may perform at least operation 1210 as follows. The UE is in a connected mode (e.g., an RRC connected mode) with respect to a cell of a base station, e.g., an eNB of 3GPP LTE or a gNB of 5G NR

At 1210, the processing element may transmit, via dedicated uplink signaling, a request for system information to the base station. The transmission of the request does not collide with unicast data reception of the connected mode because dedicated uplink signaling is used to transmit the request. (As variously described above, a base station or cell of a base station may transmit unicast data to the UE in the connected mode.)

Signaling is said to be "dedicated" when the signaling is transmitted on time-frequency resources that have been dedicated (or reserved) for transmission of the signaling to the UE (and/or reception of the signaling by the UE). For example, dedicated uplink signaling is signaling on uplink resources that are dedicated for transmission of the signaling by the UE. An uplink transmission by the UE over resources identified in an uplink grant from the base station may represent dedicated uplink signaling. (However, the random access channel does not qualify as a dedicated signaling since it is contention based. Thus, the above described request is not transmitted as part of a random access procedure.) Likewise, dedicated downlink signaling is signaling on downlink resources that are dedicated for transmission of the signaling to the UE.

In some embodiments, the processing element may receive the system information from the base station, e.g., as shown at 1215. In different embodiments, the system information may be received from a dedicated channel or from a non-dedicated (e.g., broadcast) channel. The term "dedicated channel" means a channel whose time-frequency resources are dedicated for use (e.g., transmission or reception) by the UE.

In some embodiments, the system information may be received as part of an RRC reconfiguration message. RRC is an acronym for Radio Resource Control.

In some embodiments, the request for system information may be a request for update of previously received system information. In these embodiments, the processing element may be further configured to: receive an activation time associated with the system information; and activate the received system information at the activation time, e.g., as variously described above.

In some embodiments, the request for system information may identify one or more system information block numbers In these embodiments, the system information received at 1215 may include one or more system information blocks conforming respectively to the one or more system information block numbers.

In some embodiments, the request may include cell identification information that identifies a non-primary cell for which the system information is requested. The cell identification information may be realized in any of various forms, e.g., by: a cell index; or a Cell Global Identity (CGI); or a combination of frequency indicator and Physical Cell ID (PCI).

In some embodiments, the request indicates at least a portion of a particular system information block (SIB) that the UE is requesting. Thus, the system information received from the base station may include the indicated portion of the particular SIB.

In some embodiments, the processing element may be further configured to perform the following operation. Prior to receiving the system information, the processing element may receive an indication that indicates whether or not the request has been granted, where the indication is received via dedicated downlink signaling. (The base station may transmit this indication in response to receiving the system information request from the UE.)

In some embodiments, in response to determining that the received indication indicates that the request has been granted, the processing element may be configured to receive the system information via dedicated downlink signaling, e.g., as variously described above.

In some embodiments, in response to determining that the received indication indicates that the request has not been granted, the processing element may be configured to receive the system information in a legacy fashion (e.g., from a broadcast channel).

In some embodiments, in response to determining that the received indication indicates that the request has been granted, the processing element may be configured to receive scheduling information indicating when the requested system information will be available for reception by the UE device. The scheduling information may be received via dedicated downlink signaling, e.g., as part of the RRC reconfiguration message.

In some embodiments, if the request is granted, the base station may transmit the above described indication with scheduling information for the requested system information. The scheduling information may inform the UE of when or where in time-frequency space the requested system information (e.g., one or more SIBs, or, one or more SIB portions) will be broadcast to the UE.

In some embodiments, the processing element may be further configured to: start a timer in response to said transmission of the request for system information; and refrain from transmitting a second request for system information until after the timer expires.

Various ones of the above described embodiments may enable a UE device in connected mode to acquire desired system information with increased performance. For example, the UE device may acquire desired system information with lower time delay and/or lower power consumption. Furthermore, the UE device may avoid interruptions of unicast transmissions and/or collision-related failures in system information acquisition.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of a method embodiments described herein, or, any combination of the method embodiments described herein, or, any subset of any of the method embodiments described herein, or, any combination of such subsets.

In some embodiments, a computer system may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The computer system may be realized in any of various forms. For example, the computer system may be a personal computer (in any of its various realizations), a workstation, a computer on a card, an application-specific computer in a box, a server computer, a client computer, a hand-held device, a user equipment (UE) device, a tablet computer, a wearable computer, etc.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A wireless user equipment (UE) device comprising:
a radio subsystem for performing wireless communication;
a processing element operatively coupled to the radio subsystem, wherein, in a connected mode, the processing element is configured to:
transmit, via dedicated uplink signaling, a request for system information.

2. The wireless UE device of claim 1, wherein, in the connected mode, the processing element is further configured to receive the system information, wherein the request for system information is a request for update of previously received system information, wherein the processing element is further configured to:
receive an activation time; and
activate the received system information at the activation time.

3. The wireless UE device of claim 1, wherein:
the request identifies one or more system information block numbers; or
the request includes cell identification information that identifies a non-primary cell for which the system information is being requested; or
the request indicates at least a portion of a particular system information block (SIB).

4. The wireless UE device of claim 1, wherein the requested system information is received from a channel that is dedicated for the wireless UE device at least for a limited period of time.

5. The wireless UE device of claim 1, wherein the processing element is further configured to:
prior to receiving the system information, receiving an indication that indicates whether or not the request has been granted, wherein the indication is received via dedicated downlink signaling for the wireless UE device.

6. The wireless UE device of claim 5, wherein, in response to determining that the indication indicates that the request has been granted, the processing element is configured to receive the system information via dedicated downlink signaling.

7. The wireless UE device of claim 5, wherein, in response to determining that the indication indicates that the request has been granted, the processing element is configured to receive scheduling information indicating when the requested system information will be available for reception by the UE device, wherein the scheduling information is received via dedicated downlink signaling.

8. The wireless UE device of claim 1, wherein the processing element is further configured to:
start a timer in response to said transmission of the request for system information; and
refrain from transmitting a second request for system information until after the timer expires.

9. A method of operating a wireless user equipment (UE) device, the method comprising:
in a connected mode of the UE device, transmitting, via dedicated uplink signaling, a request for system information.

10. The method of claim 9, wherein the request for system information is a request for update of previously received system information, wherein the method further comprises:
in the connected mode, receiving the system information and an activation time for the system information; and
activating the received system information at the activation time.

11. The method of claim 9, wherein:
the request identifies one or more system information block numbers; or
the request includes cell identification information that identifies a non-primary cell for which the system information is being requested; or
the request indicates at least a portion of a particular system information block (SIB).

12. The method of claim 9, wherein the requested system information is received from a channel that is dedicated for the wireless UE device at least for a limited period of time.

13. The method of claim 9, further comprising:
prior to receiving the system information, receiving an indication that indicates whether or not the request has been granted, wherein the indication is received via dedicated downlink signaling.

14. The method of claim 9, further comprising:
starting a timer in response to said transmission of the request for system information; and
refraining from transmitting a second request for system information until after the timer expires.

15. A non-transitory computer readable memory medium storing program instructions executable by a processing element to cause a user equipment (UE) device to perform the method recited in any one of claims 9 through 14.
